# EUROPEAN PATENT SPECIFICATION

(11) **EP 4 439 751 B1**
(45) Date of publication and mention of the grant of the patent: **03.06.2026**
(21) Application number: 23779179.3
(22) Date of filing: 01.03.2023
(51) Int. Cl.: H01G 11/80, H01G 11/12, H01G 11/06, H01G 11/82, H01M 10/04, H01M 4/02, H01M 4/13, H01M 50/103, H01M 10/052, H01M 10/0566, H01M 10/0585, H01M 50/184, H01M 50/186, H01M 50/197, H01M 50/627, H01M 10/0525, H01M 50/46, H01M 50/477, H01M 50/474, H01G 11/72

(54) **POWER STORAGE DEVICE**
ENERGIESPEICHERVORRICHTUNG
DISPOSITIF DE STOCKAGE D'ÉNERGIE

(30) Priority: 29.03.2022 JP 2022053493; 10.06.2022 JP 2022094629
(43) Date of publication of application: 02.10.2024
(73) Proprietor: KABUSHIKI KAISHA TOYOTA JIDOSHOKKI, Kariya-shi, Aichi 448-8671 (JP)
(72) Inventor: KURITA, Mikiya, Kariya-shi, Aichi 448-8671 (JP); SAEKI, Yuya, Kariya-shi, Aichi 448-8671 (JP); OKAMOTO, Yuki, Kariya-shi, Aichi 448-8671 (JP); ISHIGURO, Fumihiko, Kariya-shi, Aichi 448-8671 (JP); HIROSE, Takayuki, Kariya-shi, Aichi 448-8671 (JP)
(74) Representative: TBK
(86) International application number: PCT/JP2023/007634
(87) International publication number: WO 2023/189149

(56) References cited:
- JP-A- 2006 318 662
- JP-A- 2018 120 718
- JP-A- 2019 129 070
- JP-A- 2019 129 070
- JP-A- 2020 140 860
- JP-A- 2021 015 699
- JP-A- 2021 015 699
- JP-A- 2021 140 971

## Description

### Technical Field

The present disclosure relates to a power storage device.

### Background Art

In related art, there has been known a power storage device including a stacked body including a plurality of electrodes and a sealing body for sealing a side surface of the stacked body (see, for example, Patent Literature 1). In such a power storage device, the sealing body has a member including a seal welded to one surface of a current collector of the electrode. A liquid injection port for injecting an electrolyte into an internal space is formed in the seal.

### Citation List

### Patent Literature

Patent Literature 1: Japanese Unexamined Patent Publication No. 2019-200955. Patent Literature 2: JP2018009966A.

### Summary of Invention

### Technical Problem

In the power storage device described above, it may be required to relatively increase a thickness of the seal in order to form the liquid injection port in the seal. However, when the thickness of the seal increases, the current collector may be deformed due to thermal contraction of the seal when the seal is welded to one surface of the current collector.

An object of the present disclosure is to provide a power storage device capable of suppressing deformation of a current collector. The present invention is a power storage device according to claim 1. Further embodiments are provided in the dependent claims.

### Solution to Problem

A power storage device of the present disclosure includes a stacked body including a first electrode and a second electrode stacked in a stacking direction; and a sealing body for sealing a side surface of the stacked body. The first electrode has a first current collector including a first surface, and a positive electrode active material layer provided on the first surface, the second electrode has a second current collector including a second surface facing the first surface, and a negative electrode active material layer provided on the second surface, the sealing body has a first seal including a first seal portion welded to the first surface to surround the positive electrode active material layer as viewed from the stacking direction, a second seal including a second seal portion welded to the second surface to surround the negative electrode active material layer as viewed from the stacking direction, a spacer sandwiched by the first seal portion and the second seal portion, and a welding portion formed by welding outer edge portions of the first seal, the second seal, and the spacer positioned outside of outer edges of the first current collector and the second current collector as viewed from the stacking direction, the spacer includes a first liquid injection port communicating with internal spaces formed by the first electrode, the second electrode, and the sealing body and in which an electrolyte is stored, the welding portion includes a second liquid injection port communicating with the first liquid injection port, and a thickness of the spacer is larger than a thickness of each of the first seal portion and the second seal portion.

In this power storage device, the first seal portion is welded to the first surface of the first current collector, and the second seal portion is welded to the second surface of the second current collector. In addition, the welding portion is formed by welding the outer edge portions of the first seal portion, the second seal portion, and the spacer. As a result, the internal space can be reliably sealed. In addition, the thickness of the spacer is larger than the thickness of each of the first seal portion and the second seal portion, and the first liquid injection port is formed in the spacer. As a result, it is possible to sufficiently reduce the thickness of the first seal portion or the second seal portion while sufficiently securing the thickness of the spacer for forming the first liquid injection port. Therefore, according to this power storage device, it is possible to suppress the deformation of the current collector caused by the welding of the first seal portion to the first surface or the welding of the second seal portion to the second surface.

A width of the second liquid injection port may be smaller than a width of the first liquid injection port. As a result, it is possible to suppress backflow of the electrolyte stored in the internal space to the outside.

The power storage device may further include a separator provided between the positive electrode active material layer and the negative electrode active material layer. A peripheral edge portion of the separator may be positioned between the spacer and the second seal portion, and a volume of a first region between the separator and the first electrode among the internal spaces may be larger than a volume of a second region between the separator and the second electrode among the internal spaces. In this case, since the first liquid injection port communicates with the first region having a large volume, smooth liquid injection can be realized.

As viewed from the stacking direction, an area of the positive electrode active material layer may be smaller than an area of the negative electrode active material layer. As a result, the volume of the first region can be made larger than the volume of the second region, and as described above, smooth injection can be realized.

A thickness of the positive electrode active material layer may be larger than a thickness of the negative electrode active material layer. As a result, the volume of the first region can be made larger than the volume of the second region, and as described above, smooth injection can be realized.

The positive electrode active material layer may include a groove extending in a direction in which the first liquid injection port and the internal space are aligned. As a result, it is possible to suppress the flow of the electrolyte from being obstructed by the positive electrode active material layer, and as a result, it is possible to realize smooth injection of the electrolyte.

The spacer may include a first spacer and a second spacer formed in a frame shape and stacked in the stacking direction. As a result, since the thickness of the spacer can be easily adjusted, the power storage device can be easily manufactured.

The power storage device may further include a separator provided between the positive electrode active material layer and the negative electrode active material layer, the first liquid injection port may be formed in the first spacer, and a peripheral edge portion of the separator may be welded to the second spacer. As a result, for example, the peripheral edge portion of the separator can be more reliably fixed as compared with a case where the peripheral edge portion of the separator is welded to the first spacer. Thus, a short circuit between the first electrode and the second electrode can be suppressed.

As viewed from the stacking direction, an inner edge of the second spacer may be positioned inside an inner edge of the first spacer. As a result, a region of the second spacer for welding the separator can be sufficiently secured. Thus, the peripheral edge portion of the separator can be more reliably fixed, and a short circuit between the first electrode and the second electrode can be more reliably suppressed.

The spacer may further include a third spacer stacked on a side opposite to the first spacer with respect to the second spacer, and the first liquid injection port may be formed in each of the first spacer and the third spacer. As a result, the liquid can be injected from both sides of the separator in the stacking direction. Thus, smooth liquid injection can be realized.

### Advantageous Effects of Invention

According to the present disclosure, it is possible to provide the power storage device capable of suppressing the deformation of the current collector.

### Brief Description of Drawings

FIG. 1 is a schematic sectional view of a power storage device according to a first embodiment.
FIG. 2 is a partially enlarged view of FIG. 1.
FIG. 3 is a side view of the power storage device illustrated in FIG. 1.
FIG. 4 is a sectional view taken along line IV-IV of FIG. 2.
FIG. 5 is a diagram illustrating steps of a method for manufacturing the power storage device illustrated in FIG. 1.
FIG. 6 is a diagram illustrating steps of the method for manufacturing the power storage device illustrated in FIG. 1.
FIG. 7 is a diagram illustrating steps of the method for manufacturing the power storage device illustrated in FIG. 1.
FIG. 8 is a diagram illustrating steps of the method for manufacturing the power storage device illustrated in FIG. 1.
FIG. 9 is a diagram illustrating steps of the method for manufacturing the power storage device illustrated in FIG. 1.
FIG. 10 is a diagram illustrating steps of the method for manufacturing the power storage device illustrated in FIG. 1.
FIG. 11 is a diagram illustrating steps of the method for manufacturing the power storage device illustrated in FIG. 1.
FIG. 12 is a partially enlarged view of a sectional view of a power storage device according to a second embodiment.
FIG. 13 is a diagram illustrating steps of a method for manufacturing the power storage device illustrated in FIG. 12.
FIG. 14 is a diagram illustrating steps of the method for manufacturing the power storage device illustrated in FIG. 12.
FIG. 15 is a partially enlarged view of a sectional view of a power storage device according to a third embodiment.
FIG. 16 is a diagram illustrating steps of a method for manufacturing the power storage device illustrated in FIG. 15.
FIG. 17 is a diagram illustrating steps of the method for manufacturing the power storage device illustrated in FIG. 15.

### Description of Embodiments

Hereinbelow, embodiments of the present disclosure will be described in detail with reference to the drawings. In the drawings, the same or corresponding parts are denoted by the same reference signs, and redundant description will be omitted.

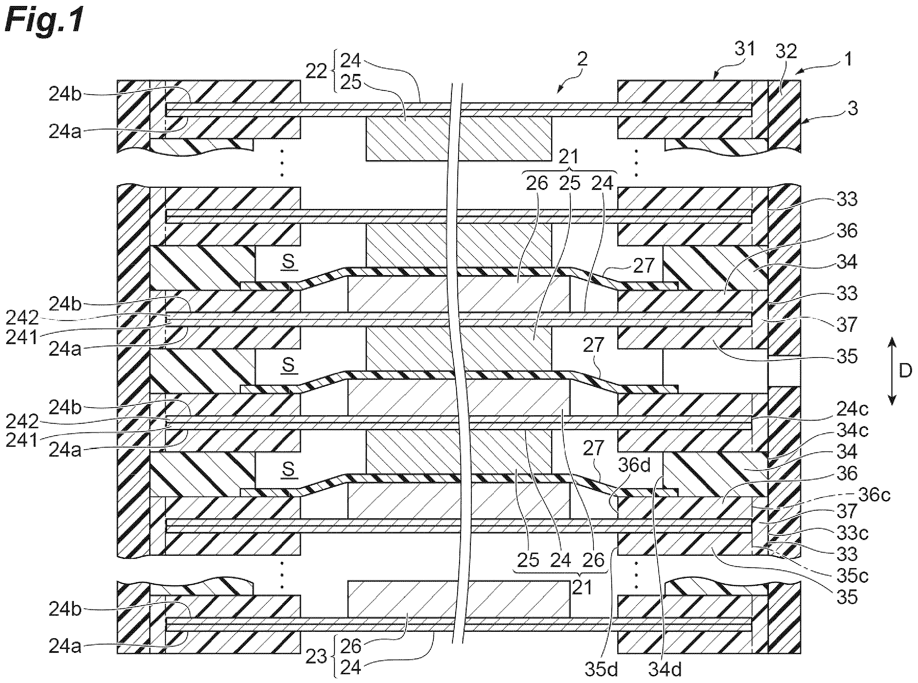

[First Embodiment] A power storage device 1 according to a first embodiment illustrated in FIG. 1 is, for example, a power storage module used for a battery of a forklift, a hybrid vehicle, an electric vehicle, or the like. The power storage device 1 is, for example, a secondary battery such as a nickel-hydrogen secondary battery or a lithium-ion secondary battery. In the present embodiment, the power storage device 1 is the lithium-ion secondary battery.

As illustrated in FIG. 1, the power storage device 1 includes a stacked body 2 and a sealing body 3. The stacked body 2 includes a plurality of bipolar electrodes 21, a positive electrode terminal electrode 22, and a negative electrode terminal electrode 23. The plurality of bipolar electrodes 21, the positive electrode terminal electrode 22, and the negative electrode terminal electrode 23 are stacked in a stacking direction D. Each bipolar electrode 21 includes a current collector 24, a positive electrode active material layer 25, and a negative electrode active material layer 26.

The current collector 24 has, for example, a rectangular shape as viewed from the stacking direction D. The current collector 24 includes a front surface 24a and a front surface 24b opposite to the front surface 24a.

The positive electrode active material layer 25 is provided on the front surface 24a. The positive electrode active material layer 25 has, for example, a rectangular shape as viewed from the stacking direction D. The front surface 24a includes an uncoated region where the positive electrode active material layer 25 is not provided. The uncoated region of the front surface 24a surrounds the positive electrode active material layer 25 as viewed from the stacking direction D. The negative electrode active material layer 26 is provided on the front surface 24b. The negative electrode active material layer 26 has, for example, a rectangular shape as viewed from the stacking direction D. The front surface 24b includes an uncoated region where the negative electrode active material layer 26 is not provided. The uncoated region of the front surface 24b surrounds the negative electrode active material layer 26 as viewed from the stacking direction D. The plurality of bipolar electrodes 21 are stacked such that the positive electrode active material layer 25 of one bipolar electrode 21 and the negative electrode active material layer 26 of the other bipolar electrode 21 face each other. That is, the plurality of bipolar electrodes 21 are stacked such that the front surface 24a of the current collector 24 of one bipolar electrode 21 and the front surface 24b of the current collector 24 of the other bipolar electrode 21 face each other among adjacent bipolar electrodes 21.

The positive electrode terminal electrode 22 is disposed on one side in the stacking direction D with respect to the plurality of bipolar electrodes 21. The positive electrode terminal electrode 22 includes a current collector 24 and a positive electrode active material layer 25. The positive electrode terminal electrode 22 is different from the bipolar electrode 21 in that the negative electrode active material layer 26 is not provided. Other configurations of the positive electrode terminal electrode 22 may be the same as the configurations of the bipolar electrode 21. The positive electrode terminal electrode 22 is disposed such that the positive electrode active material layer 25 of the positive electrode terminal electrode 22 faces the negative electrode active material layer 26 of the bipolar electrode 21. That is, the positive electrode terminal electrode 22 is stacked such that the front surface 24a of the current collector 24 of the positive electrode terminal electrode 22 faces the front surface 24b of the current collector 24 of the bipolar electrode 21 adjacent to the positive electrode terminal electrode 22.

The negative electrode terminal electrode 23 is disposed on the other side in the stacking direction D with respect to the plurality of bipolar electrodes 21. The negative electrode terminal electrode 23 includes a current collector 24 and a negative electrode active material layer 26. The negative electrode terminal electrode 23 is different from the bipolar electrode 21 in that the positive electrode active material layer 25 is not provided. Other configurations of the negative electrode terminal electrode 23 may be the same as the configurations of the bipolar electrode 21. The negative electrode terminal electrode 23 is disposed such that the negative electrode active material layer 26 of the negative electrode terminal electrode 23 faces the positive electrode active material layer 25 of the bipolar electrode 21. That is, the negative electrode terminal electrode 23 is stacked such that the front surface 24b of the current collector 24 of the negative electrode terminal electrode 23 faces the front surface 24a of the current collector 24 of the bipolar electrode 21 adjacent to the negative electrode terminal electrode 23. Internal spaces S in which an electrolyte is stored are formed between the bipolar electrodes 21, between the bipolar electrode 21 and the positive electrode terminal electrode 22, and between the bipolar electrode 21 and the negative electrode terminal electrode 23.

The stacked body 2 includes a plurality of separators 27. The separator 27 is disposed between the adjacent bipolar electrodes 21, between the bipolar electrode 21 and the positive electrode terminal electrode 22, and between the bipolar electrode 21 and the negative electrode terminal electrode 23. The separator 27 is positioned between the positive electrode active material layer 25 and the negative electrode active material layer 26 facing each other. The separator 27 has, for example, a sheet shape. The separator 27 has, for example, a rectangular shape as viewed from the stacking direction D. As viewed from the stacking direction D, an outer edge of the separator 27 is positioned outside each o outer edges of the positive electrode active material layer 25 and the outer edge of the negative electrode active material layer 26. The separator 27 is a member that causes charge carriers such as lithium ions to pass therethrough. The separator 27 separates the electrodes 21, 22, and 23 adjacent to each other. As a result, an electrical short circuit due to contact between the electrodes 21, 22, and 23 is prevented.

The current collector 24 is a chemically inactive electric conductor for causing a current to continuously flow through the positive electrode active material layer 25 and the negative electrode active material layer 26 during discharge or charge of the lithium-ion secondary battery. A material of the current collector 24 is, for example, a metal material, a conductive resin material, a conductive inorganic material, or the like. Examples of the conductive resin material include a resin obtained by adding a conductive filler to a conductive polymer material or a nonconductive polymer material. The current collector 24 may include one or more layers containing the above-described metal material or conductive resin material. A coating layer by a known method such as plating or spray coating may be formed on the front surface of the current collector 24.

The current collector 24 may have, for example, a plate shape, a foil shape, a sheet shape, a film shape, a mesh shape, or the like. In a case where the current collector 24 is a metal foil, the current collector 24 may be, for example, an aluminum foil, a copper foil, a nickel foil, a titanium foil, a stainless steel foil, or the like. The current collector 24 may be an alloy foil or a clad foil of the above-described metal. In a case where the current collector 24 has a foil shape, a thickness of the current collector 24 may be in a range of 1 µm or more and 100 µm or less. The current collector 24 may be a stacked body having a plurality of metal layers stacked in the stacking direction D. The current collector 24 may be, for example, a stacked body in which an aluminum layer and a copper layer are integrated by performing copper plating on one surface of an aluminum foil. The current collector 24 may be a stacked body in which a plurality of metal foils are integrated by being bonded to each other with a conductive adhesive interposed therebetween. In the present embodiment, the current collector 24 includes a first layer 241 and a second layer 242 stacked in the stacking direction D, and the first layer 241 and the second layer 242 are electrically connected. The front surface 24a of the current collector 24 is a front surface of the first layer 241. The front surface 24b of the current collector 24 is a front surface of the second layer 242. In the present embodiment, the first layer 241 of the current collector 24 contains aluminum, and is, for example, an aluminum foil. In the present embodiment, the second layer 242 of the current collector 24 contains copper, and is, for example, a copper foil. The current collector 24 of the positive electrode terminal electrode 22 may not include the second layer 242.

The positive electrode active material layer 25 contains a positive electrode active material capable of occluding and releasing charge carriers such as lithium ions. Examples of the positive electrode active material include a composite oxide, metal lithium, and sulfur. A composition of the composite oxide includes, for example, at least one of iron, manganese, titanium, nickel, cobalt, and aluminum, and lithium. Examples of the composite oxide include olivine type lithium iron phosphate (LiFePO₄), LiCoO₂, and LiNiMnCoO₂.

The negative electrode active material layer 26 contains a negative electrode active material capable of occluding and releasing charge carriers such as lithium ions. Examples of the negative electrode active material include graphite, artificial graphite, highly oriented graphite, mesocarbon microbeads, carbon such as hard carbon and soft carbon, metal compounds, elements capable of being alloyed with lithium or compounds thereof, boron-added carbon, and the like. Examples of the element capable of being alloyed with lithium include silicon and tin.

Each of the positive electrode active material layer 25 and the negative electrode active material layer 26 may contain a binder and a conductive assistant in addition to the active material. The binder plays a role of connecting the active material or the conductive assistant to each other and maintaining a conductive network in the electrode. Examples of the binder include fluorine-containing resins such as polyvinylidene fluoride, polytetrafluoroethylene, and fluororubber, thermoplastic resins such as polypropylene and polyethylene, imide resins such as polyimide and polyamidimide, alkoxysilyl group-containing resins, acrylic resins such as acrylic acid and methacrylic acid, alginates such as styrenebutadiene rubber, carboxymethyl cellulose, sodium alginate, and ammonium alginate, water-soluble cellulose ester crosslinked bodies, and starch-acrylic acid graft polymers. The binder thereof can be used alone or in combination. The conductive assistant is, for example, a conductive material such as acetylene black, carbon black, or graphite, and can enhance electrical conductivity. For example, N-methyl-2-pyrrolidone or the like is used as a viscosity regulation solvent.

Known methods in the related art such as a roll coating method, a die coating method, a dip coating method, a doctor blade method, a spray coating method, and a curtain coating method are used for the formation of the positive electrode active material layer 25 on the front surface 24a and the formation of the negative electrode active material layer 26 on the front surface 24b. Specifically, a slurry-state composition for forming an active material layer is manufactured by mixing an active material, a solvent, and a binder and a conductive assistant as necessary, the composition for forming an active material layer is applied to the front surface 24a or the front surface 24b, and the front surface is then dried. The solvent is, for example, N-methyl-2-pyrrolidone, methanol, methyl isobutyl ketone, or water. In order to increase an electrode density, the dried front surface may be compressed.

The separator 27 may be, for example, a porous sheet or a nonwoven fabric containing a polymer that absorbs and holds an electrolyte. Examples of a material of the separator 27 include polypropylene, polyethylene, polyolefin, polyester, and the like. The separator 27 may have a single layer structure or a multilayer structure. In a case where the separator 27 has the multilayer structure, the separator 27 may include, for example, a base material layer and a pair of adhesive layers, and may adhere and be fixed to the positive electrode active material layer 25 and the negative electrode active material layer 26 by the pair of adhesive layers. The separator 27 may include a ceramic layer serving as a heat resistant layer. The separator 27 may be reinforced with a vinylidene fluoride resin compound.

Examples of the electrolyte with which the separator 27 is impregnated include a liquid containing a nonaqueous solvent and an electrolyte salt dissolved in the nonaqueous solvent. Known lithium salts such as LiClO₄, LiAsF₆, LiPF₆, LiBF₄, LiCF₃SO₃, LiN(FSO₂)₂, and LiN(CF₃SO₂)₂ can be used as the electrolyte salt of the electrolyte. In addition, known solvents such as cyclic carbonates, cyclic esters, chain carbonates, chain esters, and ethers can be used as the nonaqueous solvent. Two or more of these known solvent materials may be used in combination.

The sealing body 3 is a member that seals the internal space S. The sealing body 3 is provided on a side surface of the stacked body 2. The sealing body 3 seals the side surface of the stacked body 2. The sealing body 3 has, for example, a rectangular cylindrical shape. The sealing body 3 has electrical insulation.

The sealing body 3 includes a body portion 31 and a welding portion 32. The body portion 31 is provided at an outer edge portion of the stacked body 2. The body portion 31 includes a plurality of independent members. The body portion 31 includes a plurality of seals 33 and a plurality of spacers 34. The seal 33 includes a seal portion 35 provided on the front surface 24a of the current collector 24, a seal portion 36 provided on the front surface 24b of the current collector 24, and a seal portion 37 provided on a side surface of the current collector 24.

Each of the seal portions 35 and 36 has, for example, a rectangular frame shape as viewed from the stacking direction. The seal portion 35 surrounds the positive electrode active material layer 25 and the negative electrode active material layer 26 as viewed from the stacking direction D. An inner edge 35d of the seal portion 35 is separated from the positive electrode active material layer 25. An outer edge 35c of the seal portion 35 substantially coincides with an outer edge 24c of the current collector 24 as viewed from the stacking direction D. The seal portion 35 is welded to the front surface 24a. The seal portion 36 surrounds the positive electrode active material layer 25 and the negative electrode active material layer 26 as viewed from the stacking direction D. An inner edge 36d of the seal portion 36 is separated from the negative electrode active material layer 26. The inner edge 36d of the seal portion 36 substantially coincides with the inner edge 35d of the seal portion 35 as viewed from the stacking direction D. An outer edge 36c of the seal portion 36 substantially coincides with the outer edge 24c of the current collector 24 as viewed from the stacking direction D. The seal portion 36 is welded to the front surface 24b.

The seal portion 37 is provided on the side surface of the current collector 24. The seal portion 37 covers the side surface of the current collector 24. The seal portion 37 is welded to the side surface of the current collector 24. The seal portion 37 seals between the first layer 241 and the second layer 242. The seal portion 37 is connected to each of the outer edge 35c of the seal portion 35 and the outer edge 36c of the seal portion 36. The seal portions 35, 36, and 37 are partial regions of the seal 33 integrally made of the same material.

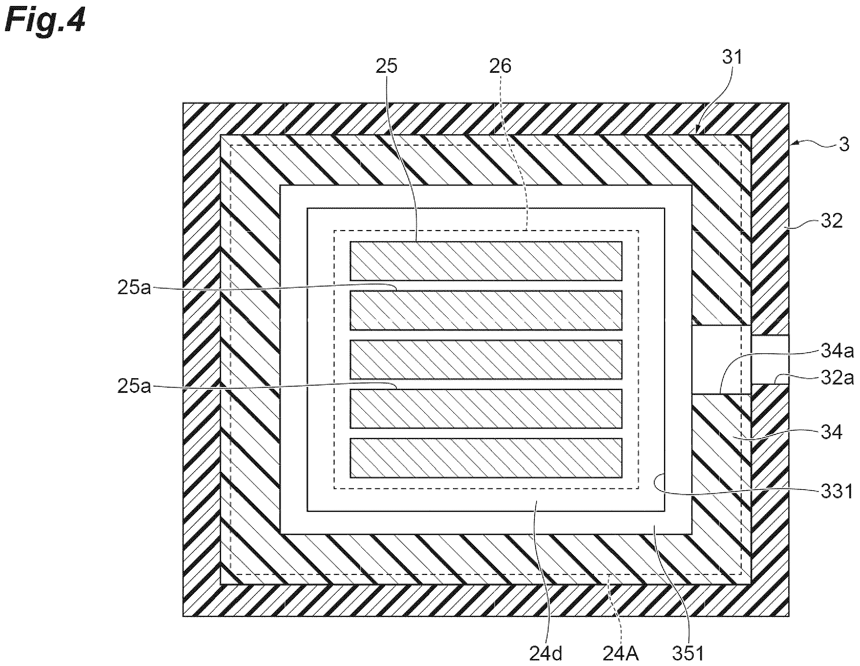

The spacer 34 has, for example, a rectangular frame shape (see FIG. 4) in which a part is cut out for a liquid injection port 34a to be described later. The spacer 34 is provided between the pair of seals 33 adjacent to each other in the stacking direction D. The inner edge 34d of the spacer 34 may be positioned on a side opposite to the positive electrode active material layer 25 or the negative electrode active material layer 26 with respect to each of the inner edge 35d of the seal portion 35 and the inner edge 36d of the seal portion 36 as viewed from the stacking direction. That is, the inner edge 34d of the spacer 34 may be positioned to be separated from the positive electrode active material layer 25 or the negative electrode active material layer 26 than the inner edge 35d of the seal portion 35 and the inner edge 36d of the seal portion 36. The outer edge 34c of the spacer 34 substantially coincides with the outer edge 33c of the seal 33 as viewed from the stacking direction D. The inner edge 34d of the spacer 34 may be disposed at a position closer to the positive electrode active material layer 25 or the negative electrode active material layer 26 than the inner edge 35d of the seal portion 35 and the inner edge 36d of the seal portion 36.

A material of each of the seal 33 and the spacer 34 is, for example, acid-modified polyethylene (acid-modified PE), acid-modified polypropylene (acid-modified PP), polyethylene, polypropylene, or the like. Each of the seal 33 and the spacer 34 has electrolyte resistant properties. The materials of the seal 33 and the spacer 34 may be the same as each other or different from each other. In the present embodiment, the material of the seal 33 is, for example, acid-modified polyethylene or acid-modified polypropylene. In the present embodiment, the material of the spacer 34 is, for example, polyethylene or polypropylene.

Acid-modified polyethylene and acid-modified polypropylene are easily bonded to metal as compared with polyethylene which is not acid-modified and polypropylene which is not acid-modified. In a case where the current collector 24 is made of metal, bonding strength of the seal portions 35 and 36 to the current collector 24 can be improved by making the seal portions 35 and 36 of acid-modified polyethylene or acid-modified polypropylene.

The welding portion 32 is provided outside the body portion 31. The welding portion 32 is integrated by welding the outer edge portions of each seal 33 and each spacer 34. The welding portion 32 has, for example, a rectangular cylindrical shape. The welding portion 32 continuously extends from one end to the other end of the stacked body 2 in the stacking direction D. In the present embodiment, as an example, the welding portion 32 is formed by welding the outer edge portions of each seal 33 and each spacer 34 positioned outside the outer edge 24c of the current collector 24 (the outer edge 35c of the seal portion 35 and the outer edge 36c of the seal portion 36) as viewed from the stacking direction D. The welding portion 32 may be formed such that an inner edge of the welding portion 32 does not overlap each current collector 24 as viewed from the stacking direction D.

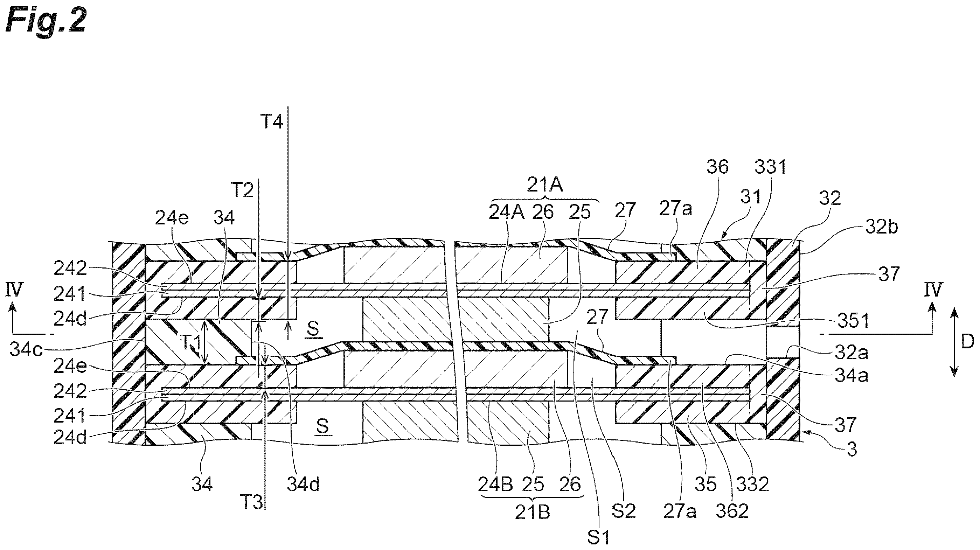

Hereinafter, description will be given focusing on a pair of electrodes (for example, a pair of bipolar electrodes 21) adjacent to each other with reference to FIG. 2. As illustrated in FIG. 2, the power storage device 1 includes a first electrode 21A and a second electrode 21B adjacent to the first electrode 21A. The first electrode 21A and the second electrode 21B are a pair of bipolar electrodes 21 adjacent to each other illustrated in FIG. 1. The first electrode 21A includes a first current collector 24A, and the second electrode 21B includes a second current collector 24B. Each of the first current collector 24A and the second current collector 24B is the current collector 24 illustrated in FIG. 1. Each of the first current collector 24A and the second current collector 24B includes a front surface 24d and a front surface 24e. The front surface 24d is the front surface 24a illustrated in FIG. 1, and the front surface 24e is the front surface 24b illustrated in FIG. 1. The body portion 31 includes a first seal 331 and a second seal 332. The first seal 331 is provided on the first current collector 24A, and the second seal 332 is provided on the second current collector 24B. Each of the first seal 331 and the second seal 332 is the seal 33 illustrated in FIG. 1. The first seal 331 includes a first seal portion 351. The first seal portion 351 is welded to the front surface 24d of the first current collector 24A. The first seal portion 351 is the seal portion 35 illustrated in FIG. 1. The second seal 332 includes a second seal portion 362. The second seal portion 362 is welded to the front surface 24e of the second current collector 24B. The second seal portion 362 is the seal portion 36 illustrated in FIG. 1.

The spacer 34 forms the internal space S for storing the electrolyte together with the first electrode 21A, the first seal 331, the second electrode 21B, and the second seal 332. The spacer 34 is sandwiched between the first seal portion 351 and the second seal portion 362. The spacer 34 is a member separate from the first seal 331 and the second seal 332. The spacer 34 is in contact with each of the first seal portion 351 and the second seal portion 362. The spacer 34 is not welded to each of the first seal portion 351 and the second seal portion 362.

A thickness T1 of the spacer 34 is larger than each of a thickness T2 of the first seal portion 351 and a thickness T3 of the second seal portion 362. The thickness T1 of the spacer 34 is, for example, twice or more the thickness T2 of the first seal portion 351 or the thickness T3 of the second seal portion 362. The thickness T1 of the spacer 34 is smaller than a thickness T4 of the first seal 331 or the second seal 332. That is, the thickness T1 of the spacer 34 is smaller than the sum of the thickness of the current collector 24, the thickness T2 of the first seal portion 351, and the thickness T3 of the second seal portion 362. The thickness T2 of the first seal portion 351 and the thickness T3 of the second seal portion 362 may be the same as each other or different from each other.

A peripheral edge portion 27a of the separator 27 is positioned between the spacer 34 and the second seal portion 362. The peripheral edge portion 27a of the separator 27 may be sandwiched between the spacer 34 and the second seal portion 362 in a region excluding the liquid injection port 34a to be described later. The peripheral edge portion 27a of the separator 27 may be welded and fixed to the second seal portion 362. The separator 27 partitions the internal space S into a first region S1 and a second region S2. The first region S1 is a region between the separator 27 and the first electrode 21A among the internal spaces S. The second region S2 is a region between the separator 27 and the second electrode 21B among the internal spaces S.

A volume of the first region S1 is larger than a volume of the second region S2. Specifically, as viewed from the stacking direction D, an area of the positive electrode active material layer 25 is smaller than an area of the negative electrode active material layer 26. As viewed from the stacking direction D, the outer edge of the positive electrode active material layer 25 is positioned inside the outer edge of the negative electrode active material layer 26. In addition, a plurality of grooves 25a (see FIG. 4) to be described later are formed in the positive electrode active material layer 25. Further, as described above, the peripheral edge portion 27a of the separator 27 is positioned between the spacer 34 and the second seal portion 362. With such a configuration, the volume of the first region S1 is larger than the volume of the second region S2. In addition, in one example, the thickness of the positive electrode active material layer 25 may be larger than the thickness of the negative electrode active material layer 26. In this case, the volume of the first region S1 is further larger than the volume of the second region S2.

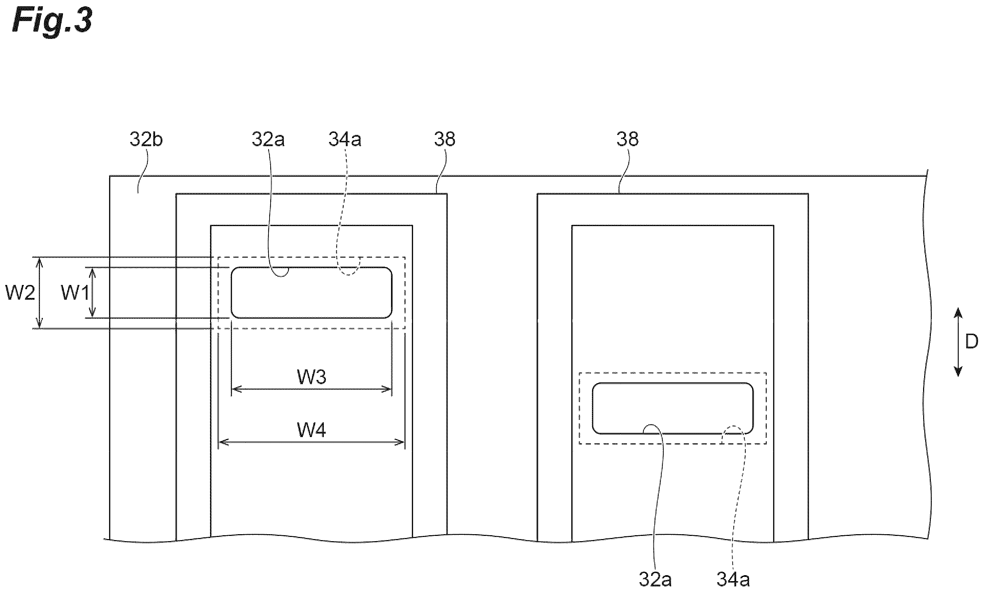

As illustrated in FIGS. 2 and 3, the spacer 34 includes the liquid injection port (first liquid injection port) 34a. The liquid injection port 34a penetrates the spacer 34. The liquid injection port 34a is opened to each of the outer edge 34c and the inner edge 34d of the spacer 34. The liquid injection port 34a communicates with the internal space S. The liquid injection port 34a functions as a path for injecting the electrolyte into the internal space S. The liquid injection ports 34a of the plurality of spacers 34 may be formed at different positions as viewed from the stacking direction D. As an example, the liquid injection ports 34a of the plurality of spacers 34 aligned in the stacking direction D are disposed to be aligned obliquely with respect to the stacking direction D. The liquid injection ports 34a communicating with the internal spaces S adjacent to each other in the stacking direction D are disposed at positions shifted from each other not to overlap each other as viewed from the stacking direction D. The liquid injection port 34a has, for example, a rectangular shape as viewed from a direction intersecting an outer surface 32b of the welding portion 32.

The welding portion 32 includes a plurality of liquid injection ports (second liquid injection ports) 32a. The liquid injection port 32a penetrates the welding portion 32. The liquid injection port 32a is opened in the outer surface 32b of the welding portion 32. The liquid injection port 32a communicates with the liquid injection port 34a. The liquid injection port 32a functions as a path for injecting the electrolyte into the internal space S via the liquid injection port 34a. Similarly to the liquid injection port 32a, the liquid injection ports 34a are aligned obliquely with respect to the stacking direction D. The liquid injection ports 32a communicating with the internal spaces S adjacent to each other in the stacking direction D are disposed at positions shifted from each other not to overlap each other as viewed from the stacking direction D. The liquid injection port 32a has, for example, a rectangular shape as viewed from the direction intersecting the outer surface 32b of the welding portion 32.

As viewed from the direction intersecting the outer surface 32b, an area of the liquid injection port 32a is smaller than an area of the liquid injection port 34a. As viewed from the direction intersecting the outer surface 32b, the liquid injection port 32a may be positioned, for example, inside the liquid injection port 34a. A width W1 of the liquid injection port 32a in the stacking direction D is smaller than a width W2 of the liquid injection port 34a in the stacking direction D. As viewed from the direction intersecting the outer surface 32b, a width W3 of the liquid injection port 32a in a direction intersecting the stacking direction D is smaller than a width W4 of the liquid injection port 34a in the direction intersecting the stacking direction D.

A frame portion 38 surrounding the liquid injection port 32a is formed on the outer surface 32b. The frame portion 38 protrudes from the outer surface 32b. The frame portion 38 has, for example, a rectangular frame shape as viewed from the direction intersecting the outer surface 32b. As viewed from the direction intersecting the outer surface 32b, an inner edge of the frame portion 38 is positioned outside the liquid injection port 32a and the liquid injection port 34a. A region inside the frame portion 38 communicates with the liquid injection port 34a via the liquid injection port 32a.

As illustrated in FIG. 4, the positive electrode active material layer 25 includes the plurality of grooves 25a. Each groove 25a extends in a direction in which the liquid injection port 32a, the liquid injection port 34a, and the internal space S are aligned. Each groove 25a reaches both ends of the positive electrode active material layer 25 in the extending direction of the groove 25a. A depth of each groove 25a in the stacking direction D is the same as a thickness of the positive electrode active material layer 25 in the stacking direction D. That is, each groove 25a is formed to reach the front surface 24d of the first current collector 24A in the stacking direction D. The front surface 24d of the first current collector 24A is exposed to each groove 25a. Each groove 25a is a part of the first region S1. The electrolyte injected from the liquid injection ports 32a and 34a is movable via a region between the positive electrode active material layer 25 and the spacer 34 and each groove 25a in the first region S1.

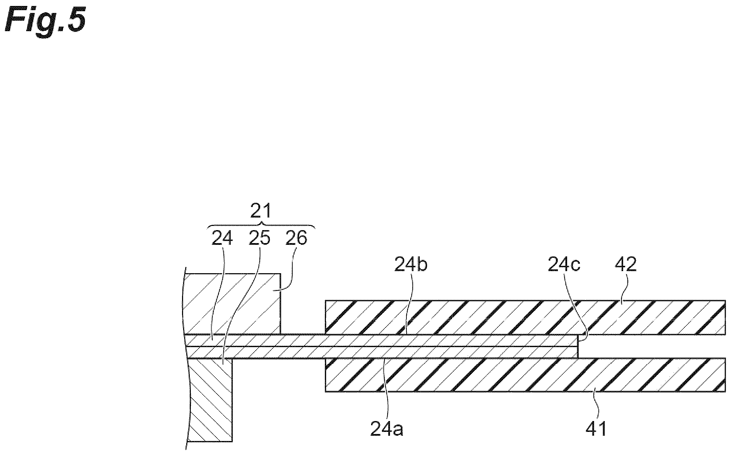

Next, a method for manufacturing the power storage device 1 will be described. First, as illustrated in FIG. 5, the bipolar electrode 21, a seal member 41, and a seal member 42 are prepared. Subsequently, the seal member 41 is disposed on the front surface 24a of the current collector 24, and the seal member 42 is disposed on the front surface 24b of the current collector 24. The seal member 41 and the seal member 42 are disposed to protrude from the outer edge 24c of the current collector 24. That is, as viewed from the stacking direction D, the seal member 41 disposed on the front surface 24a of the current collector 24 and the seal member 42 disposed on the front surface 24b of the current collector 24 have a portion overlapping the current collector 24 and a portion not overlapping the current collector 24, respectively.

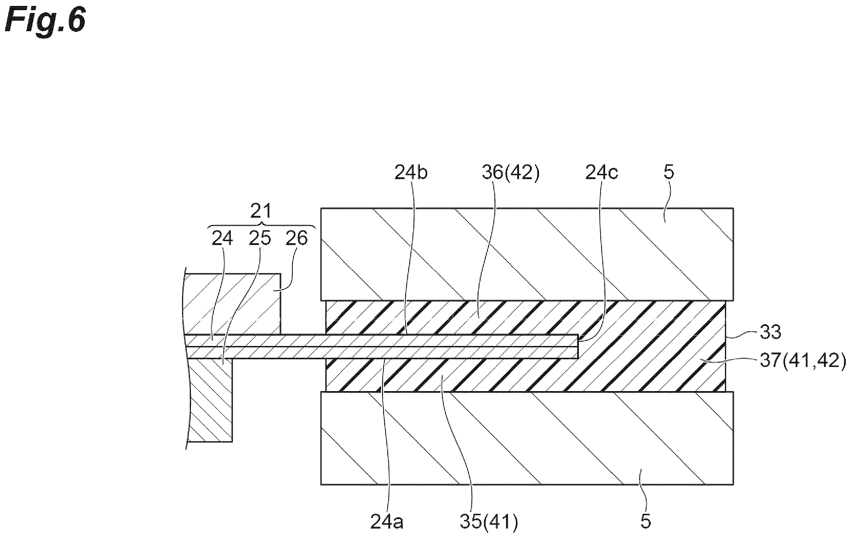

Subsequently, as illustrated in FIG. 6, front surfaces of the seal member 41 and the seal member 42 are heated by a heater 5. The heater 5 is, for example, an impulse sealer. The seal member 41 and the seal member 42 are heated in a state where the heater 5 sandwiches the current collector 24 via each of the seal member 41 and the seal member 42. As a result, a portion of the seal member 41 overlapping the front surface 24a is welded to the front surface 24a to form the seal portion 35, and a portion of the seal member 42 overlapping the front surface 24b is welded to the front surface 24b to form the seal portion 36. In addition, a portion of the seal member 41 positioned outside the outer edge 24c of the current collector 24 and a portion of the seal member 42 positioned outside the outer edge 24c of the current collector 24 are melted to form the seal portion 37. That is, the seal 33 is formed on the bipolar electrode 21. By the same step, the seal 33 is also formed on the positive electrode terminal electrode 22 and the negative electrode terminal electrode 23.

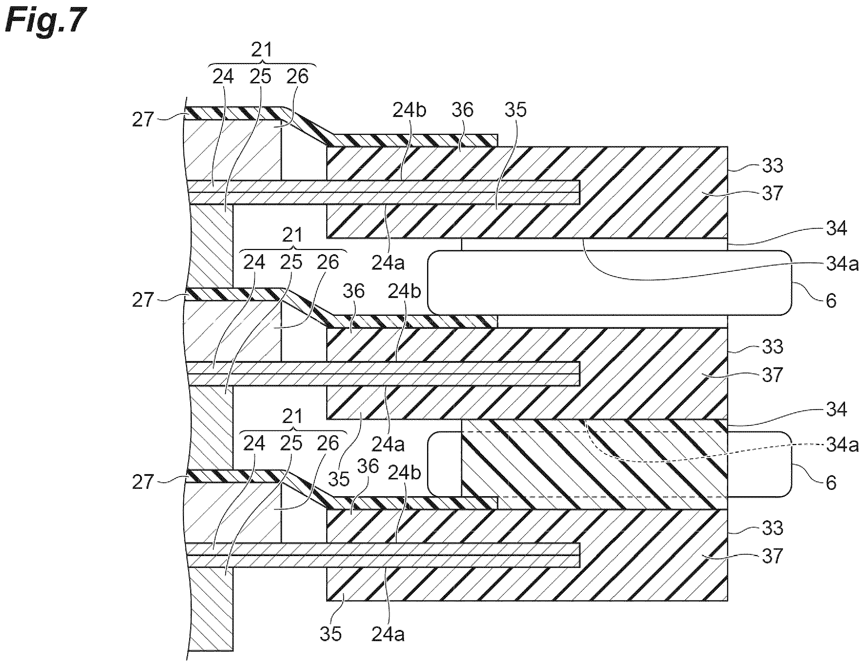

Subsequently, as illustrated in FIG. 7, the electrodes 21, 22, and 23 on which the seals 33 are formed and each spacer 34 are stacked. The spacer 34 is disposed between the seals 33. Subsequently, a liquid injection port forming member 6 is inserted into the liquid injection port 34a of the spacer 34. The liquid injection port forming member 6 has, for example, a plate shape. The liquid injection port forming member 6 extends from an outside of the spacer 34 to the internal space S. A width of the liquid injection port forming member 6 is smaller than a width of the liquid injection port 34a. That is, there is a clearance between the liquid injection port forming member 6 and the liquid injection port 34a.

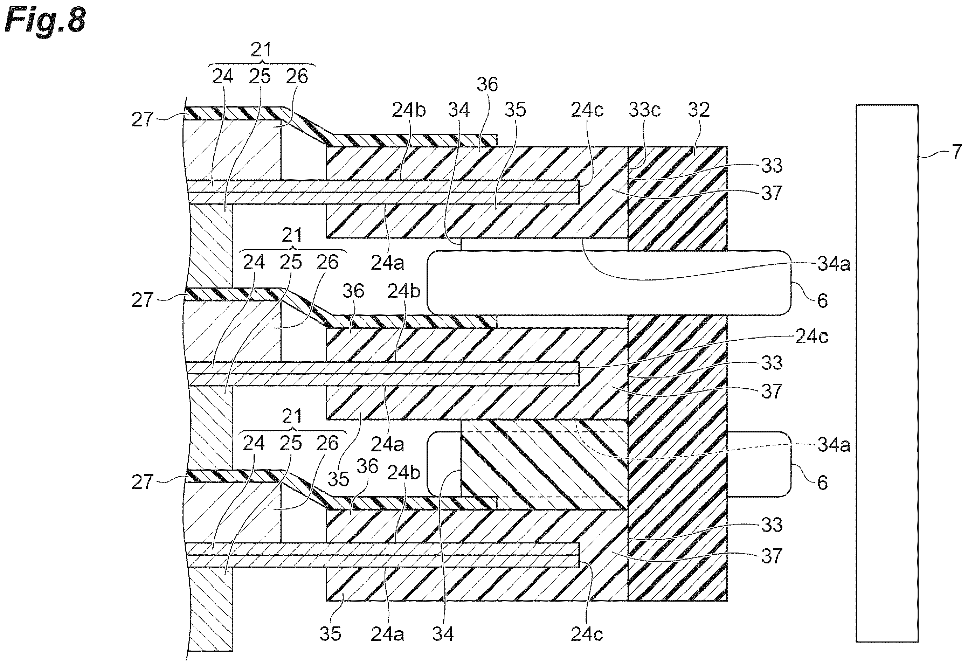

Subsequently, as illustrated in FIG. 8, outer surfaces of each seal 33 and each spacer 34 are melted by a heating device 7. Specifically, the heating device 7 is, for example, an infrared heater or the like. The heating device 7 irradiates the outer surfaces of each seal 33 and each spacer 34 with infrared rays. When the outer surfaces of each seal 33 and each spacer 34 are irradiated with the infrared rays, temperatures of each seal 33 and each spacer 34 increase. Each seal 33 and each spacer 34 are controlled to be heated by the heating device 7 to have a temperature equal to or higher than a melting point. As a result, the outer edge portions of each seal 33 and each spacer 34 are melted. When the outer edge portions of each seal 33 and each spacer 34 are melted, the molten liquid portion flows to fill a gap between the liquid injection port 34a and the liquid injection port forming member 6. When heating by the heating device 7 is stopped, the melted outer edge portions of each seal 33 and each spacer 34 are cooled and solidified to become the welding portions 32.

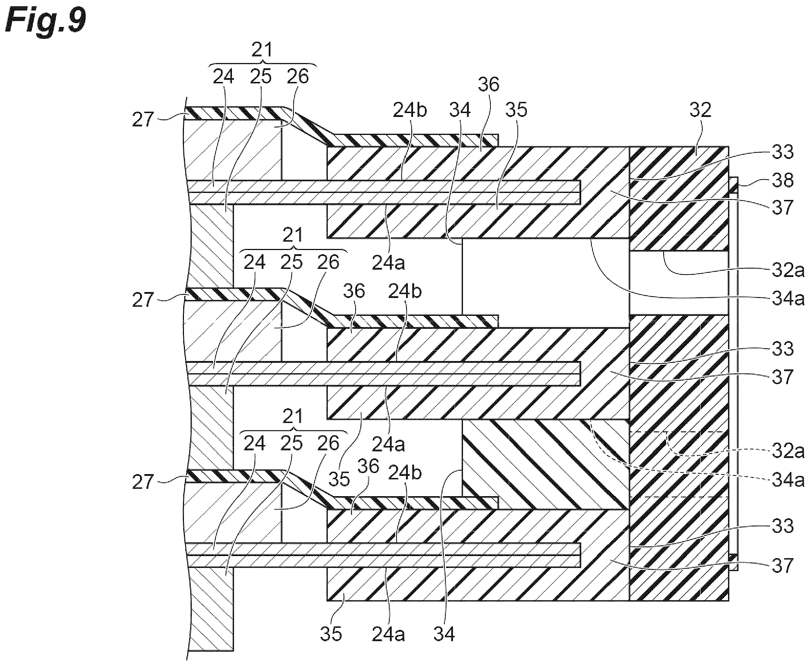

Subsequently, as illustrated in FIG. 9, each liquid injection port forming member 6 is pulled out from the liquid injection port 34a. As a result, the liquid injection port 32a is formed in the welding portion 32. Subsequently, the frame portion 38 is formed on the outer surface 32b of the welding portion 32 by, for example, injection-molding or the like.

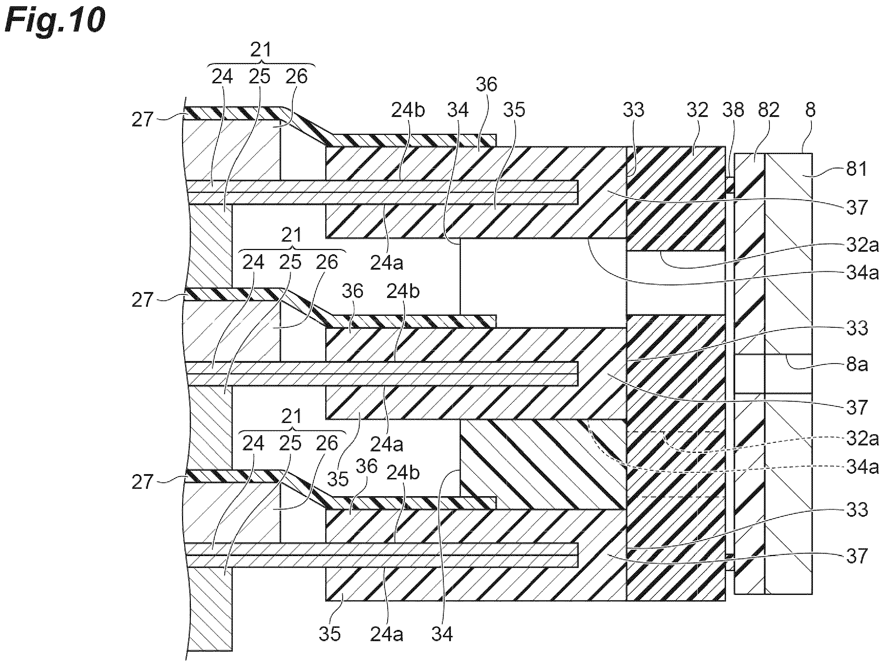

Subsequently, as illustrated in FIG. 10, the electrolyte is injected into each internal space S via each liquid injection port 32a and each liquid injection port 34a. Specifically, a facility-side nozzle 8 is pressed against the frame portion 38. The facility-side nozzle 8 includes a support member 81 and a seal member 82. The seal member 82 is provided on a front surface of the support member 81. The seal member 82 is, for example, an elastic body. The seal member 82 is, for example, a packing or the like. A plurality of liquid injection ports 8a are formed in the facility-side nozzle 8. Each liquid injection port 8a corresponds to each liquid injection port 32a and each liquid injection port 34a. A front surface of the seal member 82 is pressed against the frame portion 38. When the front surface of the seal member 82 is pressed against the frame portion 38, at least a part of the frame portion 38 bites into the seal member 82. As a result, a space between the frame portion 38 and the seal member 82 is sealed. Subsequently, the electrolyte is injected into the internal space S by using the facility-side nozzle 8.

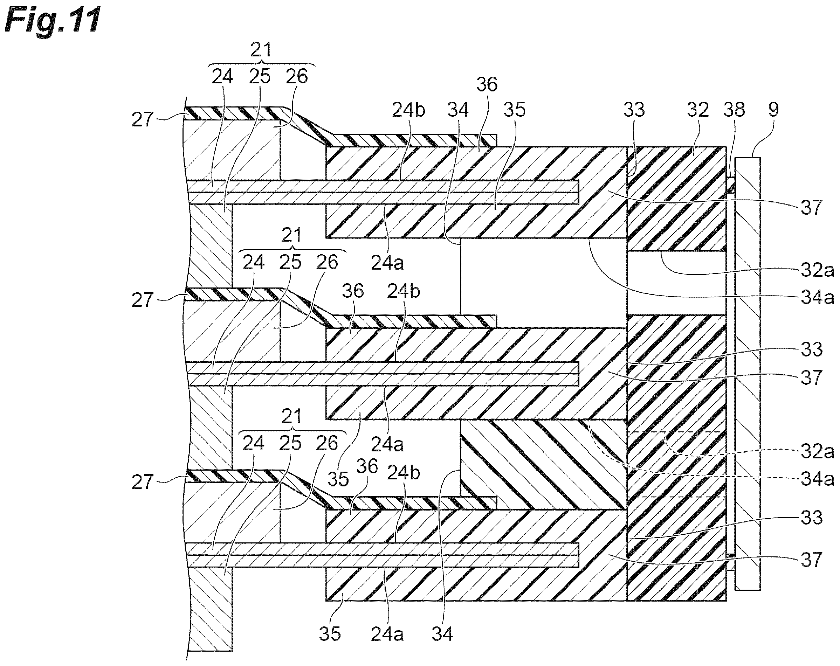

Subsequently, as illustrated in FIG. 11, each liquid injection port 32a is sealed. Specifically, the liquid injection port 32a surrounded by the frame portion 38 is sealed by bonding the sealing material 9 to the frame portion 38. As a result, the power storage device 1 illustrated in FIG. 1 is manufactured. In FIG. 1, the illustration of the frame portion 38 and the sealing material 9 is omitted.

As described above, in the power storage device 1, the first seal portion 351 is welded to the front surface 24d of the first current collector 24A, and the second seal portion 362 is welded to the front surface 24e of the second current collector 24B. In addition, the welding portion 32 is formed by welding the outer edge portions of each seal 33 and each spacer 34. As a result, the internal space S can be reliably sealed. In addition, the thickness T1 of the spacer 34 is larger than each of the thickness T2 of the first seal portion 351 and the thickness T3 of the second seal portion 362, and the liquid injection port 34a is formed in the spacer 34. As a result, in the sealing body 3 that defines the internal space S together with the electrodes disposed to face each other, the thickness of the first seal portion 351 welded to the first current collector 24A or the second seal portion 362 welded to the second current collector 24B in the stacking direction D can be sufficiently reduced while sufficiently securing the thickness of the spacer 34 for forming the liquid injection port 34a in the stacking direction D. Therefore, according to the power storage device 1, it is possible to suppress the deformation (for example, wrinkles or the like) of the first current collector 24A caused by the welding of the first seal portion 351 to the front surface 24d or the deformation (for example, wrinkles or the like) of the second current collector 24B caused by the welding of the second seal portion 362 to the front surface 24e. In addition, according to the power storage device 1, the width of the liquid injection port 34a which forms a flow path at the time of injecting the electrolyte in the stacking direction D can be increased, and the electrolyte can be efficiently injected into the internal space S.

The width of the liquid injection port 32a is smaller than the liquid injection port 34a. As a result, it is possible to suppress backflow of the electrolyte stored in the internal space S to the outside.

The peripheral edge portion 27a of the separator 27 is fixed to the seal portion 36. The volume of the first region S1 among the internal spaces S is larger than the volume of the second region S2 among the internal spaces S. As a result, since the liquid injection port 34a communicates with the first region S1 having a large volume, smooth liquid injection can be realized.

As viewed from the stacking direction D, the area of the positive electrode active material layer 25 is smaller than the area of the negative electrode active material layer 26. As a result, the volume of the first region S1 can be set to be larger than the volume of the second region S2, and as described above, smooth injection can be realized.

The thickness of the positive electrode active material layer 25 is larger than the thickness of the negative electrode active material layer 26. As a result, the volume of the first region S1 can be set to be larger than the volume of the second region S2, and as described above, smooth injection can be realized.

The positive electrode active material layer 25 includes the groove 25a extending in a direction in which the liquid injection port 34a and the internal space S are aligned. As a result, it is possible to suppress the flow of the electrolyte from being obstructed by the positive electrode active material layer 25, and as a result, it is possible to realize smooth injection of the electrolyte. In addition, since the groove 25a reaches the front surface 24a of the current collector 24, a gas or the like generated when the positive electrode active material layer 25 is formed on the front surface 24a can be efficiently discharged from between the front surface 24a and the positive electrode active material layer 25.

The current collector 24 includes the first layer 241 and the second layer 242. The seal 33 includes the seal portion 35 welded to the front surface 24a, the seal portion 36 welded to the front surface 24b, and the seal portion 37 welded to the side surface of the current collector 24. As a result, since a seal length between the first layer 241 and the seal 33 is secured, it is possible to suppress contact with the second layer 242 after the electrolyte enters between the seal portion 35 and the front surface 24a of the first layer 241 and between the seal portion 37 and the side surface of the first layer 241. Similarly, since a seal length between the second layer 242 and the seal 33 is secured, it is possible to suppress contact with the first layer 241 after the electrolyte enters between the seal portion 36 and the front surface 24b of the second layer 242 and between the seal portion 37 and the side surface of the second layer 242.

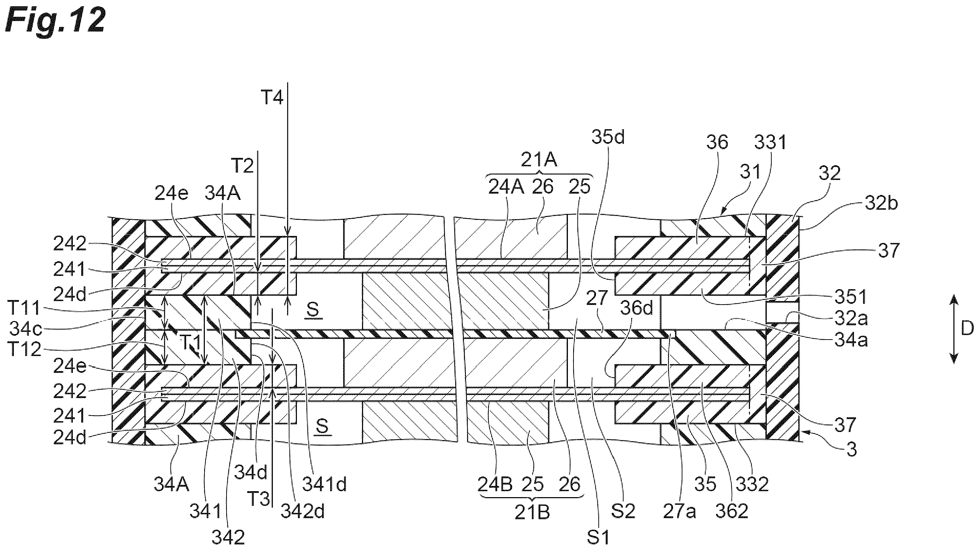

[Second Embodiment] A power storage device of a second embodiment is mainly different from the power storage device 1 of the first embodiment in that a spacer 34A is provided instead of the spacer 34. As illustrated in FIG. 12, the spacer 34A is provided between the first seal 331 and the second seal 332. The spacer 34A includes a first spacer 341 and a second spacer 342. Each of the first spacer 341 and the second spacer 342 is a separate member.

The first spacer 341 has, for example, a rectangular frame shape partially cut out for the liquid injection port 34a to be described later. The first spacer 341 is in contact with the first seal portion 351 of the first seal 331. The first spacer 341 is not welded to the first seal portion 351. An inner edge 341d of the first spacer 341 is positioned on a side opposite to the positive electrode active material layer 25 with respect to the inner edge 35d of the first seal portion 351 as viewed from the stacking direction D. That is, the inner edge 341d of the first spacer 341 is positioned to be separated from the positive electrode active material layer 25 than the inner edge 35d of the first seal portion 351. The first spacer 341 includes the liquid injection port (first liquid injection port) 34a. That is, the liquid injection port 34a is formed in the first spacer 341. The liquid injection port 34a penetrates the first spacer 341. The liquid injection port 34a is opened to each of an outer edge and the inner edge 341d of the first spacer 341.

The second spacer 342 has, for example, a rectangular frame shape. The second spacer 342 is provided between the first spacer 341 and the second seal 332. The second spacer 342 is in contact with the first spacer 341. The second spacer 342 is in contact with the second seal portion 362 of the second seal 332. The second spacer 342 is not welded to the second seal portion 362. An inner edge 342d of the second spacer 342 is positioned on ae side opposite to the negative electrode active material layer 26 with respect to the inner edge 36d of the second seal portion 362 as viewed from the stacking direction D. That is, the inner edge 342d of the second spacer 342 is positioned to be separated from the negative electrode active material layer 26 than the inner edge 36d of the second seal portion 362. The inner edge 342d of the second spacer 342 substantially coincides with the inner edge 341d of the first spacer 341 as viewed from the stacking direction D. The second spacer 342 does not include a liquid injection port. That is, the second spacer 342 has a frame shape continuously connected in a circumferential direction.

A thickness T11 of the first spacer 341 is larger than each of the thickness T2 of the first seal portion 351 and the thickness T3 of the second seal portion 362. A thickness T12 of the second spacer 342 is larger than each of the thickness T2 of the first seal portion 351 and the thickness T3 of the second seal portion 362. The thickness T11 of the first spacer 341 and the thickness T12 of the second spacer 342 are the same as each other. That is, each of the thickness T11 of the first spacer 341 and the thickness T12 of the second spacer 342 is about half of the thickness T1 of the spacer 34A. The thickness T11 of the first spacer 341 and the thickness T12 of the second spacer 342 may be different from each other. The thickness T11 of the first spacer 341 may be larger than the thickness T12 of the second spacer 342. The thickness T11 of the first spacer 341 may be smaller than the thickness T12 of the second spacer 342. The thickness T11 of the first spacer 341 may be equal to or less than the thickness T2 of the first seal portion 351 or the thickness T3 of the second seal portion 362. The thickness T12 of the second spacer 342 may be equal to or less than the thickness T2 of the first seal portion 351 or the thickness T3 of the second seal portion 362.

The peripheral edge portion 27a of the separator 27 is positioned between the first spacer 341 and the second spacer 342. The peripheral edge portion 27a of the separator 27 is welded to the second spacer 342. The peripheral edge portion 27a of the separator 27 is welded to a surface of the second spacer 342 facing the first spacer 341. The peripheral edge portion 27a of the separator 27 is welded to the second spacer 342 over the entire circumference of the second spacer 342. That is, a portion of the separator 27 welded to the second spacer 342 has a rectangular frame shape as viewed from the stacking direction D.

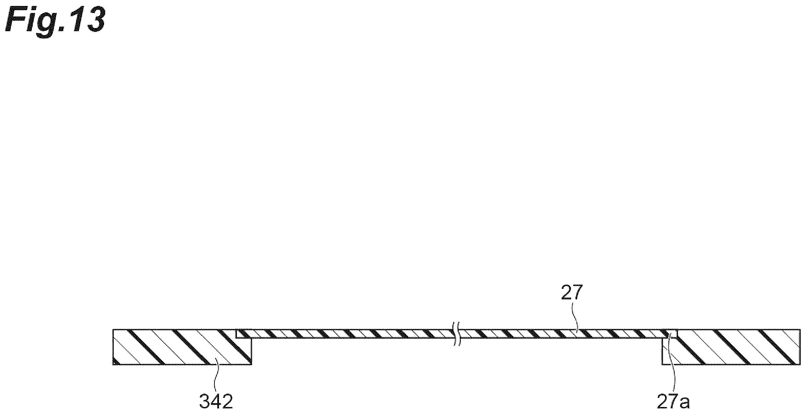

Next, a method for manufacturing the power storage device according to the second embodiment will be described. First, as in the first embodiment, the seal 33 is formed in each of the electrodes 21, 22, and 23 (see FIGS. 5 and 6). Subsequently, as illustrated in FIG. 13, the peripheral edge portion 27a of the separator 27 is welded to the second spacer 342. Specifically, after the peripheral edge portion 27a of the separator 27 is disposed on one surface of the second spacer 342, the peripheral edge portion 27a of the separator 27 and the second spacer 342 are heated.

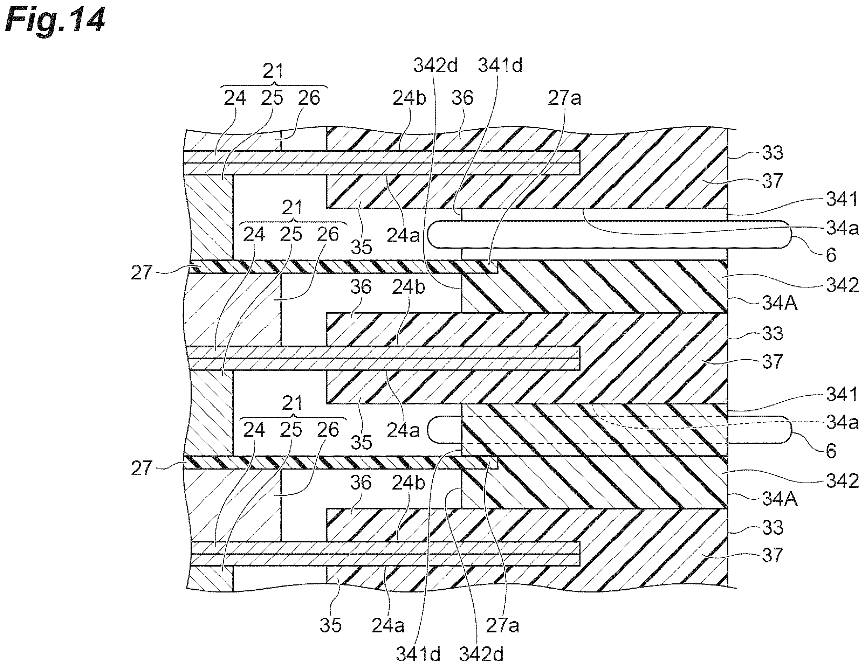

Subsequently, as illustrated in FIG. 14, the electrodes 21, 22, and 23 on which the seals 33 are formed, the second spacer 342 to which the separator 27 is welded, and the first spacer 341 are stacked. The first spacer 341 is disposed on one surface of the second spacer 342 to which the peripheral edge portion 27a of the separator 27 is welded. The first spacer 341 and the second spacer 342 are disposed between the seals 33. Subsequently, as in the first embodiment, the liquid injection port forming member 6 is inserted into the liquid injection port 34a. Subsequently, as in the first embodiment, the formation of the welding portion, the injection of the electrolyte, the sealing of the liquid injection port, and the like are performed. As a result, the power storage device of the second embodiment is manufactured.

As described above, each spacer 34A includes the first spacer 341 and the second spacer 342 formed in a frame shape and stacked in the stacking direction D. As a result, since the adjustment of the thickness of the spacer 34A becomes easy, the manufacturing of the power storage device becomes easy. In addition, since the spacer 34A includes the plurality of spacers, the thicknesses of the spacers 341 and 342 become smaller than a distance between the adjacent seals 33, and as a result, it is possible to set the thickness to be thinner than the case of using a single spacer. As a result, for example, precursors of the spacers 341 and 342 can be easily wound in a roll shape. Thus, the precursors of the spacers 341 and 342 can be easily handled, and as a result, the power storage device can be easily manufactured.

The peripheral edge portion 27a of the separator 27 is welded to the second spacer 342. In a case where the separator 27 is welded to the first spacer 341, since the separator 27 is not welded to the first spacer 341 in the region where the liquid injection port 34a is formed in the first spacer 341, the fixing of the separator 27 may be insufficient. According to the configuration of the power storage device of the second embodiment, since the peripheral edge portion 27a of the separator 27 is welded to the second spacer 342 where the liquid injection port 34a is not formed, the peripheral edge portion 27a of the separator 27 can be more reliably fixed. Thus, a short circuit between the electrodes 21, 22, and 23 can be suppressed.

In a case where the separator 27 is welded to the first seal portion 351 or the second seal portion 362, the separator 27 may be welded to the first seal portion 351 or the second seal portion 362 after the first seal portion 351 or the second seal portion 362 is welded to the current collector 24. In such a case, since the first seal portion 351 or the second seal portion 362 is heated multiple times, the welding strength of the first seal portion 351 or the second seal portion 362 to the current collector 24 may be decreased. According to the configuration of the power storage device of the second embodiment, since the peripheral edge portion 27a of the separator 27 is welded to the second spacer 342, the decrease in welding strength of the first seal portion 351 or the second seal portion 362 to the current collector 24 is suppressed.

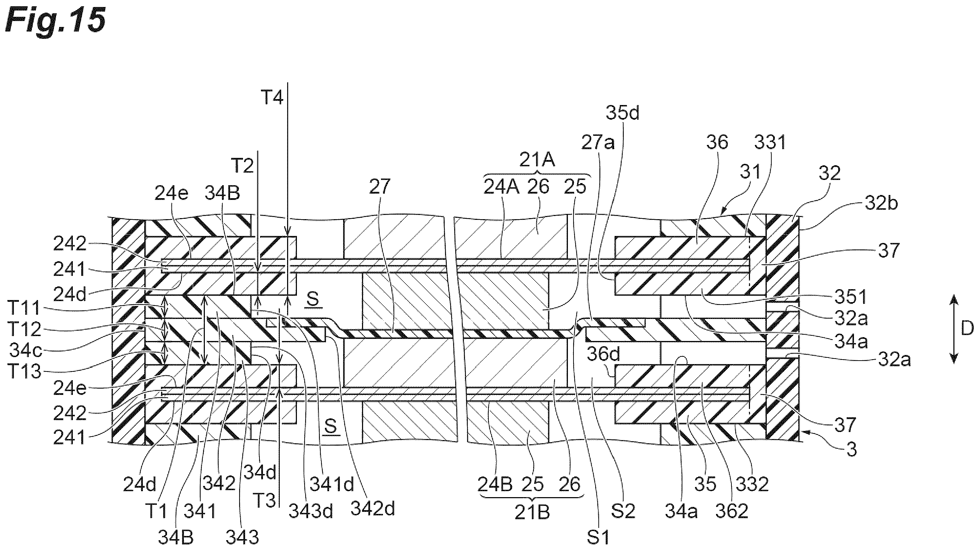

[Third Embodiment] A power storage device of a third embodiment is mainly different from the power storage device of the second embodiment in that a spacer 34B is provided instead of the spacer 34A. As illustrated in FIG. 15, the spacer 34B is provided between the first seal 331 and the second seal 332. The spacer 34B includes a first spacer 341, a second spacer 342, and a third spacer 343. Each of the first spacer 341, the second spacer 342, and the third spacer 343 is a separate member.

The thickness T11 of the first spacer 341 is about 1/3 of the thickness T1 of the spacer 34B. The other points of the first spacer 341 are the same as the points of the first spacer 341 of the second embodiment. The second spacer 342 is provided between the first spacer 341 and the third spacer 343. The thickness T12 of the second spacer 342 is the same as the thickness T11 of the first spacer 341. That is, the thickness T12 of the second spacer 342 is about 1/3 of the thickness T1 of the spacer 34B. The inner edge 342d of the second spacer 342 is positioned inside the inner edge 341d of the first spacer 341 as viewed from the stacking direction D. The inner edge 342d of the second spacer 342 is positioned inside the inner edge 35d of the first seal portion 351 or the inner edge 36d of the second seal portion 362 as viewed from the stacking direction D. A width of a side portion of the second spacer 342 is larger than a width of a side portion of the first spacer 341. The other points of the second spacer 342 are the same as the points of the second spacer 342 of the second embodiment.

The third spacer 343 is stacked on a side opposite to the first spacer 341 with respect to the second spacer 342. The third spacer 343 has, for example, a rectangular frame shape. A thickness T13 of the third spacer 343 is the same as the thickness T11 of the first spacer 341. That is, the thickness T13 of the third spacer 343 is about 1/3 of the thickness T1 of the spacer 34B. The third spacer 343 is in contact with the second seal portion 362 of the second seal 332. The third spacer 343 is not welded to the second seal portion 362. An inner edge 343d of the third spacer 343 is positioned on a side opposite to the negative electrode active material layer 26 with respect to the inner edge 36d of the second seal portion 362 as viewed from the stacking direction D. The inner edge 343d of the third spacer 343 substantially coincides with the inner edge 341d of the first spacer 341 as viewed from the stacking direction D.

The third spacer 343 includes the liquid injection port (first liquid injection port) 34a. That is, the liquid injection port 34a is also formed in the third spacer 343. The liquid injection port 34a penetrates the third spacer 343. The liquid injection port 34a is opened in each of an outer edge and the inner edge 343d of the third spacer 343.

Each of the thickness T11 of the first spacer 341, the thickness T12 of the second spacer 342, and the thickness T13 of the third spacer 343 is larger than each of the thickness T2 of the first seal portion 351 and the thickness T3 of the second seal portion 362. The thickness T11 of the first spacer 341, the thickness T12 of the second spacer 342, and the thickness T13 of the third spacer 343 may be different from each other similarly to the power storage device of the second embodiment. The thickness T13 of the third spacer 343 may be equal to or less than the thickness T2 of the first seal portion 351 or the thickness T3 of the second seal portion 362.

The peripheral edge portion 27a of the separator 27 is welded to the second spacer 342. The peripheral edge portion 27a of the separator 27 is welded to a surface of the second spacer 342 facing the first spacer 341. The peripheral edge portion 27a of the separator 27 is welded to a portion of the second spacer 342 inside the first spacer 341. The peripheral edge portion 27a of the separator 27 is welded to the second spacer 342 over the entire circumference of the second spacer 342. That is, a portion of the separator 27 welded to the second spacer 342 has a rectangular frame shape as viewed from the stacking direction D. The peripheral edge portion 27a of the separator 27 may reach between the first spacer 341 and the second spacer 342.

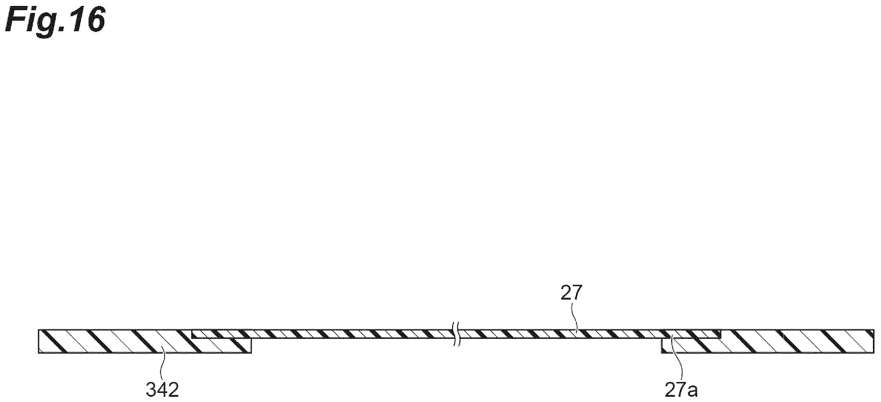

Next, a method for manufacturing the power storage device according to the third embodiment will be described. First, as in the first embodiment, the seal 33 is formed in each of the electrodes 21, 22, and 23 (see FIGS. 5 and 6). Subsequently, as illustrated in FIG. 16, the peripheral edge portion 27a of the separator 27 is welded to the second spacer 342. Specifically, after the peripheral edge portion 27a of the separator 27 is disposed on one surface of the second spacer 342, the peripheral edge portion 27a of the separator 27 and the second spacer 342 are heated.

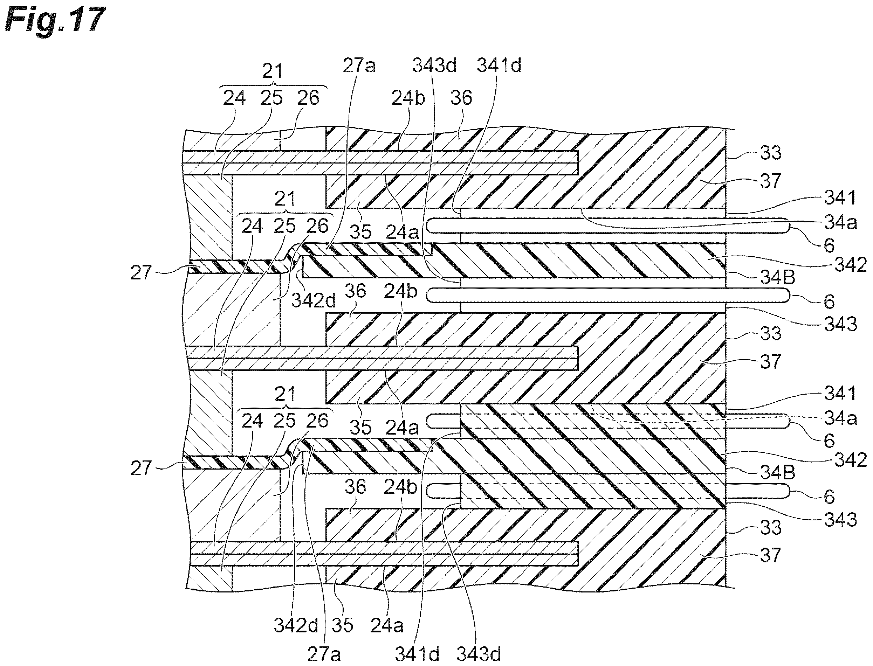

Subsequently, as illustrated in FIG. 17, the electrodes 21, 22, and 23 on which the seals 33 are formed, the second spacer 342 to which the separator 27 is welded, the first spacer 341, and the third spacer 343 are stacked. The first spacer 341 is disposed on one surface of the second spacer 342 to which the peripheral edge portion 27a of the separator 27 is welded. The third spacer 343 is disposed on the side opposite to the first spacer 341 with respect to the second spacer 342. The first spacer 341, the second spacer 342, and the third spacer 343 are disposed between the seals 33. Subsequently, as in the first embodiment, the liquid injection port forming member 6 is inserted into the liquid injection port 34a. Subsequently, as in the first embodiment, the formation of the welding portion, the injection of the electrolyte, the sealing of the liquid injection port, and the like are performed. As a result, the power storage device of the third embodiment is manufactured.

As described above, as viewed from the stacking direction D, the inner edge 342d of the second spacer 342 is positioned inside the inner edge 341d of the first spacer 341. As a result, a region of the second spacer 342 for welding the separator 27 can be sufficiently secured. Thus, the peripheral edge portion 27a of the separator 27 can be more reliably fixed, and a short circuit between the electrodes 21, 22, and 23 can be more reliably suppressed.

The spacer 34B includes the third spacer 343 stacked on the side opposite to the first spacer 341 with respect to the second spacer 342. The liquid injection port 34a is formed in each of the first spacer 341 and the third spacer 343. As a result, the liquid can be injected from both sides of the separator 27 in the stacking direction D. Thus, smooth liquid injection can be realized.

Although the embodiments of the present disclosure have been described above, the present disclosure is not limited to the above-described embodiments.

In each embodiment, although the description has been given focusing on the pair of bipolar electrodes 21, the positive electrode terminal electrode 22 and the bipolar electrode 21 adjacent to the positive electrode terminal electrode 22 may be focused. In this case, the first electrode 21A is the positive electrode terminal electrode 22, and the second electrode 21B is the bipolar electrode 21 adjacent to the positive electrode terminal electrode 22. Similarly, attention may be paid to the negative electrode terminal electrode 23 and the bipolar electrode 21 adjacent to the negative electrode terminal electrode 23. In this case, the first electrode 21A is the bipolar electrode 21 adjacent to the negative electrode terminal electrode 23, and the second electrode 21B is the negative electrode terminal electrode 23.

In each embodiment, although the example in which the current collector 24 includes the first layer 241 and the second layer 242 has been described, the current collector 24 may include only one layer.

In the first embodiment, the example in which the peripheral edge portion 27a of the separator 27 is sandwiched between the spacer 34 and the second seal portion 362 has been described, the peripheral edge portion 27a of the separator 27 may be welded to the second seal portion 362.

In the second embodiment and the third embodiment, although the example in which the peripheral edge portion 27a of the separator 27 is welded to the surface of the second spacer 342 facing the first spacer 341 has been described, the peripheral edge portion 27a of the separator 27 may be welded to the surface of the second spacer 342 opposite to the first spacer 341. In addition, in the second embodiment and the third embodiment, although the example in which the peripheral edge portion 27a of the separator 27 is welded to the second spacer 342 over the entire circumference of the second spacer 342 has been described, the peripheral edge portion 27a of the separator 27 may be welded to the second spacer 342 at predetermined intervals in the circumferential direction of the second spacer 342. That is, the peripheral edge portion 27a of the separator 27 may be partially welded to the second spacer 342. Even in this case, since the separator 27 can be welded to the second spacer 342 at intervals not depending on the width of the liquid injection port 34a, the peripheral edge portion 27a of the separator 27 can be reliably fixed. In the second embodiment and the third embodiment, the separator 27 may not be welded to the spacers 34A and 34B. In the second embodiment and the third embodiment, the peripheral edge portion 27a of the separator 27 may be welded to the first seal portion 351 or the second seal portion 362. In the second embodiment and the third embodiment, the separator 27 may not be welded.

### Reference Signs List

1 power storage device
2 stacked body
3 sealing body
21 bipolar electrode
24 current collector
24a, 24b front surface
25 positive electrode active material layer
25a groove
26 negative electrode active material layer
27 separator
27a peripheral edge portion
32 welding portion
34 spacer
32a, 34a liquid injection port
33 seal
35, 36 seal portion
341 first spacer
342 second spacer
343 third spacer
S internal space
S1 first region
S2 second region

## Claims

1. A power storage device (1) comprising:
a stacked body (2) including a first electrode (21A) and a second electrode (21B) stacked in a stacking direction; and
a sealing body (3) for sealing a side surface of the stacked body,
wherein
the first electrode has a first current collector (24B) including a first surface (24d), and a positive electrode active material layer (25) provided on the first surface,
the second electrode has a second current collector (24A) including a second surface (24e) facing the first surface, and a negative electrode active material layer (26) provided on the second surface,
the sealing body has a first seal (331) including a first seal portion (351) welded to the first surface to surround the positive electrode active material layer as viewed from the stacking direction,
a second seal (332) including a second seal portion (362) welded to the second surface to surround the negative electrode active material layer as viewed from the stacking direction,
a spacer (34) sandwiched between the first seal portion and the second seal portion, and
a welding portion (32) formed by welding outer edge portions of the first seal, the second seal, and the spacer positioned outside of outer edges of the first current collector and the second current collector as viewed from the stacking direction,
the spacer includes a first liquid injection port (34A) communicating with internal spaces formed by the first electrode, the second electrode, and the sealing body and in which an electrolyte is stored,
the welding portion includes a second liquid injection port (32A) communicating with the first liquid injection port, and
a thickness of the spacer is larger than a thickness of each of the first seal portion and the second seal portion.

2. The power storage device according to claim 1, wherein a width of the second liquid injection port is smaller than a width of the first liquid injection port.

3. The power storage device according to claim 1 or 2, further comprising:
a separator (27) provided between the positive electrode active material layer and the negative electrode active material layer, wherein
a peripheral edge portion (27A) of the separator is positioned between the spacer and the second seal portion, and
a volume of a first region between the separator and the first electrode among the internal spaces is larger than a volume of a second region between the separator and the second electrode among the internal spaces.

4. The power storage device according to claim 3, wherein as viewed from the stacking direction, an area of the positive electrode active material layer is smaller than an area of the negative electrode active material layer.

5. The power storage device according to claim 3, wherein a thickness of the positive electrode active material layer is larger than a thickness of the negative electrode active material layer.

6. The power storage device according to claim 1, wherein the positive electrode active material layer includes a groove (25A) extending in a direction in which the first liquid injection port and the internal space are aligned.

7. The power storage device according to claim 1, wherein the spacer includes a first spacer (341) and a second spacer (342) formed in a frame shape and stacked in the stacking direction.

8. The power storage device according to claim 7, further comprising:
a separator provided between the positive electrode active material layer and the negative electrode active material layer, wherein
the first liquid injection port is formed in the first spacer, and
a peripheral edge portion of the separator is welded to the second spacer.

9. The power storage device according to claim 8, wherein as viewed from the stacking direction, an inner edge of the second spacer is positioned inside an inner edge of the first spacer.

10. The power storage device according to claim 8, wherein
the spacer further includes a third spacer (343) stacked on a side opposite to the first spacer with respect to the second spacer, and
the first liquid injection port is formed in each of the first spacer and the third spacer.

## Patentansprüche

1. Energiespeichervorrichtung (1) umfassend:
einen gestapelten Körper (2), der eine erste Elektrode (21A) und eine zweite Elektrode (21B) aufweist, die in einer Stapelrichtung gestapelt sind; und
einen Dichtkörper (3) zum Abdichten einer Seitenfläche des gestapelten Körpers, wobei
die erste Elektrode einen ersten Stromabnehmer (24B), der eine erste Oberfläche (24d) aufweist, und eine auf der ersten Oberfläche vorgesehene Aktivmaterialschicht der Positivelektrode (25) hat,
die zweite Elektrode einen zweiten Stromabnehmer (24A), der eine der ersten Oberfläche zugewandte zweite Oberfläche (24e) aufweist, und eine auf der zweiten Oberfläche vorgesehene Aktivmaterialschicht der Negativelektrode (26) hat,
der Dichtkörper hat
eine erste Dichtung (331), die einen ersten Dichtungsabschnitt (351) aufweist, der an die erste Oberfläche geschweißt ist, um die Aktivmaterialschicht der Positivelektrode aus der Stapelrichtung betrachtet zu umgeben,
eine zweite Dichtung (332), die einen zweiten Dichtungsabschnitt (362) aufweist, der an die zweite Oberfläche geschweißt ist, um die Aktivmaterialschicht der Negativelektrode aus der Stapelrichtung betrachtet zu umgeben,
einen Abstandshalter (34), der zwischen dem ersten Dichtungsabschnitt und dem zweiten Dichtungsabschnitt liegt, und
einen Schweißabschnitt (32), gebildet durch Verschweißen von äußeren Randabschnitten der ersten Dichtung, der zweiten Dichtung und des Abstandshalters, der sich aus der Stapelrichtung betrachtet außerhalb der Außenkanten des ersten Stromabnehmers und des zweiten Stromabnehmers befindet.
der Abstandshalter eine erste Flüssigkeitseinspritzöffnung (34A) aufweist, die mit Innenräumen in Verbindung steht, die aus der ersten Elektrode, der zweiten Elektrode und dem Dichtkörper gebildet sind und in denen ein Elektrolyt gespeichert ist,
der Schweißabschnitt eine zweite Flüssigkeitseinspritzöffnung (32A) aufweist, die mit der ersten Flüssigkeitseinspritzöffnung in Verbindung steht, und
eine Dicke des Abstandshalters größer ist als eine Dicke sowohl des ersten Dichtungsabschnitts als auch des zweiten Dichtungsabschnitts.

2. Energiespeichervorrichtung nach Anspruch 1, wobei eine Breite der zweiten Flüssigkeitseinspritzöffnung kleiner ist als eine Breite der ersten Flüssigkeitseinspritzöffnung.

3. Energiespeichervorrichtung nach Anspruch 1 oder 2, ferner umfassend:
einen Separator (27), der zwischen der Aktivmaterialschicht der Positivelektrode und der Aktivmaterialschicht der Negativelektrode vorgesehen ist, wobei
ein peripherer Randabschnitt (27A) des Separators sich zwischen dem Abstandshalter und dem zweiten Dichtungsabschnitt befindet, und
ein Volumen eines ersten Bereichs zwischen dem Separator und der ersten Elektrode unter den Innenräumen größer ist als ein Volumen eines zweiten Bereichs zwischen dem Separator und der zweiten Elektrode unter den Innenräumen.

4. Energiespeichervorrichtung nach Anspruch 3, wobei aus der Stapelrichtung betrachtet eine Fläche der Aktivmaterialschicht der Positivelektrode kleiner ist als eine Fläche der Aktivmaterialschicht der Negativelektrode.

5. Energiespeichervorrichtung nach Anspruch 3, wobei eine Dicke der Aktivmaterialschicht der Positivelektrode größer ist als eine Dicke der Aktivmaterialschicht der Negativelektrode.

6. Energiespeichervorrichtung nach Anspruch 1, wobei die Aktivmaterialschicht der Positivelektrode eine Nut (25A) aufweist, die sich in einer Richtung erstreckt, in der die erste Flüssigkeitseinspritzöffnung und der Innenraum ausgerichtet sind.

7. Energiespeichervorrichtung nach Anspruch 1, wobei der Abstandshalter einen ersten Abstandshalter (341) und einen zweiten Abstandshalter (342) aufweist, die rahmenförmig ausgebildet und in der Stapelrichtung gestapelt sind.

8. Energiespeichervorrichtung nach Anspruch 7, ferner umfassend:
einen Separator, der zwischen der Aktivmaterialschicht der Positivelektrode und der Aktivmaterialschicht der Negativelektrode vorgesehen ist, wobei
die erste Flüssigkeitseinspritzöffnung in dem ersten Abstandshalter ausgebildet ist, und
ein peripherer Randabschnitt des Separators an den zweiten Abstandshalter geschweißt ist.

9. Energiespeichervorrichtung nach Anspruch 8, wobei sich aus der Stapelrichtung betrachtet ein Innenrand des zweiten Abstandshalters innerhalb eines Innenrands des ersten Abstandshalters befindet.

10. Energiespeichervorrichtung nach Anspruch 8, wobei
der Abstandshalter ferner einen dritten Abstandshalter (343) aufweist, der auf einer dem ersten Abstandshalter in Bezug auf den zweiten Abstandshalter gegenüberliegenden Seite gestapelt ist, und
die erste Flüssigkeitseinspritzöffnung sowohl im ersten Abstandshalter als auch im dritten Abstandshalter ausgebildet ist.

## Revendications

1. Dispositif de stockage d'énergie (1) comprenant :
un corps empilé (2) comportant une première électrode (21A) et une seconde électrode (21B) empilées dans une direction d'empilement ; et
un corps d'étanchéité (3) pour sceller une surface latérale du corps empilé, dans lequel
la première électrode a un premier collecteur de courant (24B) comportant une première surface (24d), et une couche de matériau actif d'électrode positive (25) prévue sur la première surface,
la seconde électrode a un second collecteur de courant (24A) comportant une seconde surface (24e) faisant face à la première surface, et une couche de matériau actif d'électrode négative (26) prévue sur la seconde surface,
le corps d'étanchéité a
un premier joint d'étanchéité (331) comportant une première partie d'étanchéité (351) soudée à la première surface pour entourer la couche de matériau actif d'électrode positive vu depuis la direction d'empilage,
un second joint d'étanchéité (332) comportant une seconde partie d'étanchéité (362) soudée à la seconde surface pour entourer la couche de matériau actif d'électrode négative vu depuis la direction d'empilage,
une entretoise (34) prise en sandwich entre la première partie d'étanchéité et la seconde partie d'étanchéité, et
une partie de soudage (32) formée en soudant des parties de bord extérieur du premier joint d'étanchéité, du second joint d'étanchéité et de l'entretoise positionnée à l'extérieur de bords extérieurs du premier collecteur de courant et du second collecteur de courant, vu depuis la direction d'empilage,
l'entretoise comporte un premier port d'injection de liquide (34A) communiquant avec des espaces internes formés par la première électrode, la seconde électrode et le corps d'étanchéité et dans lesquels un électrolyte est stocké,
la partie de soudage comporte un second port d'injection de liquide (32A) communiquant avec le premier port d'injection de liquide, et
une épaisseur de l'entretoise est plus grande qu'une épaisseur de chacune de la première partie d'étanchéité et de la seconde partie d'étanchéité.

2. Dispositif de stockage d'énergie selon la revendication 1, dans lequel une largeur du second port d'injection de liquide est plus petite qu'une largeur du premier port d'injection de liquide.

3. Dispositif de stockage d'énergie selon la revendication 1 ou 2, comprenant en outre :
un séparateur (27) prévu entre la couche de matériau actif d'électrode positive et la couche de matériau actif d'électrode négative, dans lequel
une partie de bord périphérique (27A) du séparateur est positionnée entre l'entretoise et la seconde partie d'étanchéité, et
un volume d'une première région entre le séparateur et la première électrode parmi les espaces internes est plus grande qu'un volume d'une seconde région entre le séparateur et la seconde électrode parmi les espaces internes.

4. Dispositif de stockage d'énergie selon la revendication 3, dans lequel, vu depuis la direction d'empilement, une zone de la couche de matériau actif d'électrode positive est plus petite qu'une zone de la couche de matériau actif d'électrode négative.

5. Dispositif de stockage d'énergie selon la revendication 3, dans lequel une épaisseur de la couche de matériau actif d'électrode positive est plus grande qu'une épaisseur de la couche de matériau actif d'électrode négative.

6. Dispositif de stockage d'énergie selon la revendication 1, dans lequel la couche de matériau actif d'électrode positive comporte une rainure (25A) s'étendant dans une direction dans laquelle le premier port d'injection de liquide et l'espace interne sont alignés.

7. Dispositif de stockage d'énergie selon la revendication 1, dans lequel l'entretoise comporte une première entretoise (341) et une deuxième entretoise (342) formées en forme de cadre et empilées dans la direction d'empilage.

8. Dispositif de stockage d'énergie selon la revendication 7, comprenant en outre :
un séparateur prévu entre la couche de matériau actif d'électrode positive et la couche de matériau actif d'électrode négative, dans lequel
le premier port d'injection de liquide est formé dans la première entretoise, et
une partie de bord périphérique du séparateur est soudée à la deuxième entretoise.

9. Dispositif de stockage d'énergie selon la revendication 8, dans lequel, vu depuis la direction d'empilage, un bord intérieur de la deuxième entretoise est positionné à l'intérieur d'un bord intérieur de la première entretoise.

10. Dispositif de stockage d'énergie selon la revendication 8, dans lequel
l'entretoise comporte en outre une troisième entretoise (343) empilée sur un côté opposé à la première entretoise par rapport à la deuxième entretoise, et
le premier port d'injection de liquide est formé dans chacune de la première entretoise et la troisième entretoise.
